# EUROPÄISCHE PATENTSCHRIFT

(11) **EP 0 625 643 B1**
(45) Veröffentlichungstag und Bekanntmachung des Hinweises auf die Patenterteilung: **14.01.1998**
(21) Anmeldenummer: 94105010.6
(22) Anmeldetag: 30.03.1994
(51) Int. Cl.: F16B 13/12

(54) **Spreizdübel**
Expansion dowel
Cheville d'expansion

(30) Priorität: 21.05.1993 DE 4317039
(43) Veröffentlichungstag der Anmeldung: 23.11.1994
(73) Patentinhaber: fischerwerke Artur Fischer GmbH & Co. KG, D-72178 Waldachtal (DE)
(72) Erfinder: Haage, Manfred, Dipl.-Ing., D-72280 Dornstetten-Aach (DE); Heinzelmann, Werner, D-72250 Freudenstadt (DE)

(56) Entgegenhaltungen:
- DE-A- 3 241 158
- DE-A- 3 329 502
- DE-A- 3 346 793
- DE-A- 3 416 797
- DE-A- 4 026 944
- FR-A- 2 456 869

## Beschreibung

Die Erfindung betrifft einen Spreizdübel gemäß Oberbegriff des Anspruchs 1

Aus der DE-A1 40 26 944 ist ein Spreizdübel bekannt, der einen in Längsrichtung zweigeteilten Spreizschaft hat. An beiden Schaftteilen stehen nach innen scheibenförmige Spreizelemente überlappend ab, die somit einen geschlossenen Spreizschaft mit zylindrischer Mantelfläche bilden. Die scheibenförmigen Spreizelemente sind mit exzentrisch positionierten Bohrungen versehen, die beim Einschrauben einer Befestigungsschraube sich koaxial ausrichten, wodurch sich die Spreizelemente seitlich verschieben. Dieser Vorgang kann als Spreizvorgang bezeichnet weden, da sich dadurch die Mantelfläche des Spreizbereichs aufweitet bzw. aufspreitzt. Ein solcher Spreizdübel ist universell verwendbar und erzielt nicht nur in Vollbaustoffen, sondern auch in Hohlbaustoffen hohe Haltewerte. Die über eine größere Länge des Spreizdübels angeordneten Spreizelemente bewirken eine gleichmäßige Aufspreizung über den gesamten Spreizbereich. Bei einer Verwendung in einem Hohlbaustoff greifen die überstehenden, scheibenförmigen Spreizelemente in die Hohlräume ein, so daß ein Formschluß im Mauerwerk im Bereich jeder Wandung, die einen Hohlraum begrenzt, erreicht wird.

Der bekannte Spreizdübel ist zweistückig ausgebildet. Mit seiner Schafthülse ist als eine Schafthälfte ein innerhalb seiner Mantelfläche in Längsrichtung verlaufender Steg einstückig verbunden, von dem jedes zweite seiner scheibenförmigen Spreizelemente in einer Radialebene nach innen abstehend einstückig angebracht ist. Als zweite Schafthälfte sind die übrigen Spreizelemente über einen zweiten, gegenüberliegend angeordneten Steg einstückig miteinander verbunden. Die beiden Schafthälften des Spreizdübels werden so zusammengesetzt, daß die Spreizelemente der beiden Stege kammartig ineinandergreifen. Herstellung in zwei Stücken und das Zusammensetzen der beiden Stücke verteuern den bekannten Spreizdübel.

Beim Einsetzen in Vollbaustoffen und teilweise auch bei Verwendung in Hohlbaustoffen kann es vorkommen, daß der Spreizdübel beim Einschlagen schon nach einer verhältnismäßig geringen Eindringtiefe sich im Bohrloch geringfügig verspann, so daß er am oberen Ende des Spreizbereichs außerhalb des Bohrloches abknicken kann. Unter ungünstigen Bedingungen kann auch der zunächst vollständig in ein Bohrloch eingetriebene Spreizdübel beim Eindrehen einer Befestigungsschraube sich mitdrehen, wodurch das Eindrehen und Aufspreizen des Spreizdübels deutlich erschwert wird.

Der Erfindung liegt die Aufgabe zugrunde, einen möglichst universell verwendbaren Spreizdübel zu schaffen, der einfach herstellbar ist und der beim Einschlagen durch oder in eine Bohrung möglichst nicht abknickt.

Die Lösung dieser Aufgabe erhält man durch die im Anspruch 1 angegebenen Merkmale. Der Spreizdübel wird vorzugsweise als Kunststoffleil in einem einzigen Spritzvorgang hergestellt, wobei die beiden Schafthälften über eine Spritzhaut im Bereich der Dübelspitze miteinander verbunden sind. Nach dem Spritzvorgang muß lediglich die eine Schafthälfte auf die andere Schafthälfte geklappt weden, wobei sie über eine formschlüssige Verbindung dreh-, knick- und zugsicher mit der Schafthülse verbunden wird. Die formschlüssige Verbindung kann beispielsweise eine Schwalbenschwanzverbindung sein. Ein derart aufgebauter Spreizdübel läßt sich kostengünstig herstellen. Die Spritzhaut, die die beiden Schafthälften im Bereich der Dübelspitze miteinander verbindet, bildet eine Art Gelenk, das die beiden Schafthälften beim Aufeinanderklappen aneinander führt und dadurch deren Zusammensetzen vereinfacht. Die formschlüssige Verbindung der mit der Schafthülse nicht einstückigen Schafthälfte sowie die Spritzhaut positionieren und halten diese Schafthälfte an der Schafthülse und an der anderen Schafthälfte auch bei den beim Einschlagen in ein Bohrloch auftretenden Belastungen.

Durch die konische Verjüngung des Spreizbereichs zur Dübelspitze hin wird das Eintreiben des Spreizdübels in ein Bohrloch wesentlich erleichtert. Der im konischen Bereich geringfügig reduzierte Schaftdurchmesser hat jedoch auf die erzielbaren Haltewerte praktisch keinen Einfluß, da die Spreizelemente beim Eindringen einer Befestigungsschraube über einen verhältnismäßig großen Weg seitlich verschoben weden, der einem Vielfachen der Durchmesserreduzierung im konischen Bereich entsprechen kann. Durch die konische Verjüngung des Spreizbereichs läßt sich der Spreizdübel mit geringerem Widerstand bis zu einer größeren Eindringtiefe in ein Bohrloch einsetzen. Dadurch stabilisiert sich der Spreizdübel im Bohrloch über eine größere Länge, wodurch er weniger leicht zum Abknicken neigt. Außerdem sind die Schafthälften, die den Spreizbereich bilden, fest mit der zur Dübelöffnung führenden Schafthülse verbunden, so daß gerade in diesem kritischen Übergangsbereich zwischen Schafthülse und Spreizbereich eine verbesserte Steifigkeit für den Spreizdübel erhalten wird.

Als Drehsicherungselemente können am Spreizbereich und am oberen geschlossenen Schaftteil (Schafthülse) außen überstehende Längsrippen vorgesehen sein, die im Übergangsbereich zwischen Schafthülse und einem Schaftteil des Spreizbereichs eine zusätzliche Längsversteifung erzeugen. Weden die Längsrippen bezüglich ihrer Längsposition und bezüglich ihrer Winkelposition am Umfang versetzt angeordnet, so kann dadurch das Einsetzen des Spreizdübels in ein Bohrloch erleichtert werden.

In der Schafthülse kann weiterhin eine Einschlagsperre in Form eines Ringbundes vorgesehen sein, der in einen Gewindegang einer teilweise eingesetzten Befestigungsschraube eingreift. Der Spreizdübel mit vormontierter Befestigungsschraube läßt sich nun über die Befestigungsschraube in ein Bohrloch einschlagen, wobei die Kraftübertragung auf den Spreizdübel über die Einschlagsperre erfolgt. Die Befestigungsschraube ist dabei vorzugsweise soweit in den Spreizdübel eingesetzt, daß diese mit ihrer Spitze geringfügig in den Spreizbereich ragt, jedoch diesen noch nicht aufspreizt. Diese Schraubenposition stützt den Spreizdübel somit im oberen Bereich ab, so daß hier ein Abknicken nicht mehr zu befürchten ist.

Die Erfindung wird nachfolgend anhand eines in der Zeichnung dargestellten Ausführungsbeispiels näher erläutert.

Es zeigen:
- Figur 1: einen Spreizdübel mit vormontierter Befestigungsschraube,
- Figur 2: den Schnitt A-B und den Schnitt C-D gemäß Figur 1,
- Figur 3 bis Figur 5: die Ansicht A gemäß Figur 1 im Bereich der Verbindung zwischen dem linken Schaftteil des Spreizbereichs und der oberen Schafthülse, wobei drei unterschiedliche Verbindungsarten dargestellt sind.

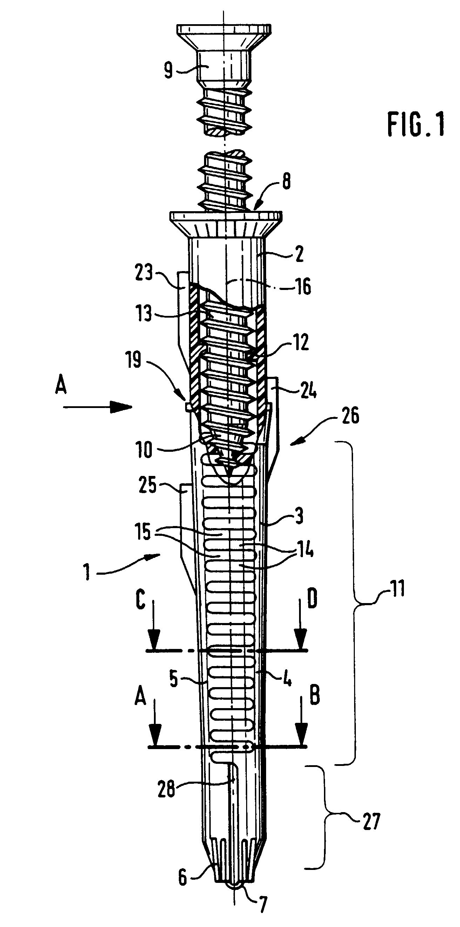

Der in Figur 1 dargestellte Spreizdübel 1 besteht aus einer Schafthülse 2 und einem mit dieser verbundenem Spreizschaft 3, der längsgeteilt ist und aus einem rechten Schaftteil 4 und einem linken Schaftteil 5 besteht. An der Dübelspitze 6 sind die beiden Schaftteile 4, 5 über eine Spritzhaut 7 miteinander verbunden. In die Dübelöffnung 8 ist eine Befestigungsschraube 9 so weit eingedreht, daß diese mit ihrer Spitze 10 geringfügig in den Spreizbereich 11 ragt. Eine als Ringbund ausgebildete Einschlagsperre 12 steht innen an der Schafthülse 2 ab und greift in einen Gewindegang 13 der Befestigungsschraube 9 ein.

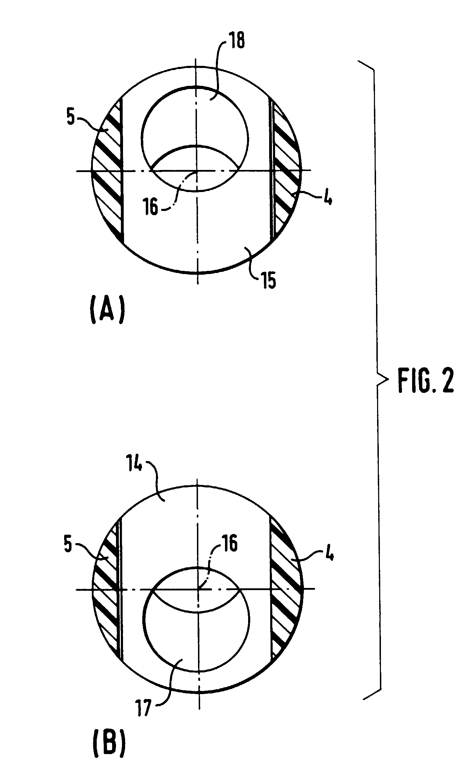

Der Spreizbereich 11 besteht aus kammartig an den Schaftteilen 4, 5 abstehenden Spreizelementen 14, 15, die jeweils exzentrisch bezüglich der Mittelachse 16 des Spreizdübels angeordnete Bohrungen 17, 18 (Figur 2) aufweisen.

Wird die Befestigungsschraube 9 in Richtung Dübelspitze 6 durch den gesamten Spreizbereich 11 eingedreht, so richten sich dabei die exzentrisch angeordneten Bohrungen 17, 18 koaxial aus, wodurch die Spreizelemente 14, 15 sich im wesentlichen senkrecht zur Bildebene von Figur 1 verschieben. In der eingangs genannten DE-A1 40 26 944 ist dies ausführlich beschrieben.

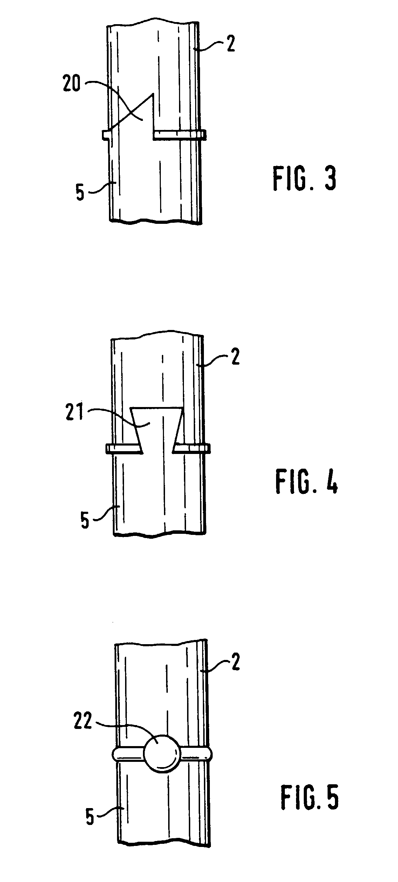

Der Schaftteil 4 ist mit der Schafthülse 2 einstückig verbunden, während der Schaftteil 5 im Verbindungsbereich 19 gemäß Figur 3 bis Figur 5 durch zusätzliche Verbindungselemente fest verbunden ist.

Figur 3 zeigt eine Ausführung mit einer Verzahnung 20, die zur Drehmomentübertragung zwischen Schaftteil 5 und Schafthülse 2 geeignet ist.

Bei der in Figur 4 dargestellten Verbindung handelt es sich um eine Schwalbenschwanzverbindung 21, die Zug-, Knick- und Drehmomentkräfte übertragen kann.

Figur 5 zeigt schließlich eine Schweißverbindung 22, mit der die Schafthülse 2 und das Schaftteil 5 unlösbar miteinander verbunden sind.

An dem Spreizdübel sind gemäß Figur 1 außerdem noch Längsrippen 23 bis 25 versetzt angeordnet, wobei die Längsrippe 24 den Übergangsbereich 26 zwischen Schafthülse 2 und Schaftteil 3 zusätzlich verstärkt.

Im Bereich der Dübelspitze 6 kann ein zusätzlicher Spreizabschnitt 27 durch einen Spalt 28 ausgebildet sein, dessen Spreizrichtung um 90° zu der Spreizrichtung des Spreizbereichs 11 ausgerichtet ist.

Wesentlich ist, daß sich der Spreizbereich 11 geringfügig in Richtung Dübelspitze 6 konisch verjüngt, wobei der Spreizabschnitt 27 dann wieder eine zylindrische Mantelfläche aufweisen kann.

## Patentansprüche

1. Spreizdübel (1) mit einem als Schafthülse (2) ausgebildeten geschlossenen Schaftteil, das einen Schraubkanal hat und in einen längsgeteilten Spreizschaft (3) übergeht, dessen beide Schafthälften (4, 5) jeweils auf Lücke versetzt angeordnete Spreizelemente (14, 15) haben, die ineinandergreifend einen geschlossenen Spreizbereich (11) bilden, wobei die Spreizelemente (14, 15) zueinander versetzt und bezüglich der Mittelachse (16) des Spreizdübels (1) exzentrisch angeordnete Bohrungen (17, 18) aufweisen, die sich so überlappen, daß der überlappende Bereich einen verengten Schraubkanal bildet, **dadurch gekennzeichnet**, daß sich der Spreizbereich (11) konisch in Richtung Dübelspitze (6) verjüngt, und daß die beiden Schafthälften (4, 5) fest mit der Schafthülse (2) verbunden sind, wobei die eine Schafthälfte (4) einstückig und die andere Schafthälfte (5) über eine formschlüssige Verbindung mit der Schafthülse (2) verbunden ist.

2. Spreizdübel nach Anspruch 1, **dadurch gekennzeichnet**, daß die formschlüssige Verbindung eine Schwalbenschwanzverbindung (21) oder eine andere dreh-, knick-, und zugsichere Verbindung ist.

3. Spreizdübel nach einem der Ansprüche 1 oder 2, **dadurch gekennzeichnet**, daß an der Schafthülse (2) und an den beiden den Spreizbereich (11) bildenden Schafthälften (4, 5) wenigstens jeweils eine Längsrippe (23 - 25) außen als Drehsicherungselement absteht.

4. Spreizdübel nach Anspruch 3, **dadurch gekennzeichnet**, daß die Längsrippen (23 - 25) bezüglich ihrer Längsposition und bezüglich ihrer Winkelposition versetzt angeordnet sind.

5. Spreizdübel nach einem der vorhergehenden Ansprüche, **dadurch gekennzeichnet**, daß am Übergangsbereich (26) zwischen Schafthülse (2) und einer Schafthälfte (4) eine Längsrippe (24) angeordnet ist,

6. Spreizdübel nach einem der vorhergehenden Ansprüche, **dadurch gekennzeichnet**, daß in der Schafthülse (2) als Ringbund oder dergleichen eine Einschlagsperre (12) für eine eingesetzte Befestigungsschraube (9) absteht.

7. Spreizdübel nach einem der vorhergehenden Ansprüche, **dadurch gekennzeichnet**, daß an der Dübelspitze (6) ein vorderer Spreizabschnitt (27) ausgebildet ist, dessen Spreizrichtung um 90° versetzt gegenüber der Spreizrichtung des von den Spreizelementen (14, 15) definierten Spreizbereichs (11) ausgerichtet ist.

8. Spreizdübel nach einem der vorhergehenden Ansprüche, **dadurch gekennzeichnet**, daß der Spreizdübel (1) aufgeklappt in einem einzigen Spritzvorgang aus Kunststoff hergestellt ist und die beiden Schafthälften (4, 5) an der Dübelspitze (6) über eine Spritzhaut (7) verbunden sind.

## Claims

1. An expansible plug (1) with a closed shank section in the form of a shank sleeve (2), which has a screw channel and continues as a longitudinally divided expansible shank (3), the two shank-halves (4, 5)of which have staggered expansible elements (14, 15) that interlock to form a closed expansion region (11), the expansible elements (14, 15) being offset with respect to one another and having bores (17, 18) arranged eccentrically with respect to the centre line (16) of the expansible plug (1), which bores overlap in such a way that the overlapping region forms a constricted screw channel, characterized in that the expansion region (11) tapers conically towards the plug tip (6) and that the two shank-halves (4, 5) are fixedly joined to the shank sleeve (2), one shank-half (4) being integrally joined to the shank sleeve (2) and the other shank-half (5) being joined by means of an interlocking joint with the shank sleeve (2).

2. An expansible plug according to claim 1, characterized in that the interlocking joint is a dovetail joint (21) or other joint proof against rotation, bending and tension.

3. An expansible plug according to claim 1 or 2, characterized in that from the shank sleeve (2) and from the two shank-halves (4, 5) forming the expansion region (11) there projects outwardly at least one respective longitudinal rib (23-25) as an anti-rotation element.

4. An expansible plug according to claim 3, characterized in that the longitudinal ribs (23-25) are arranged offset in respect of their longitudinal position and in respect of their angular position.

5. An expansible plug according to one of the preceding claims, characterized in that a longitudinal rib (24) is arranged at the transition region (26) between the shank sleeve (2) and one shank-half (4).

6. An expansible plug according to one of the preceding claims, characterized in that an impact barrier (12), in the form of an annular collar or similar construction, for an inserted fixing screw (9) projects from the shank sleeve (2).

7. An expansible plug according to one of the preceding claims, characterized in that a front expansible portion (27) is formed at the plug tip (6), the expansion direction of which is oriented offset through 90° with respect to the expansion direction of the expansion region (11) defined by the expansible elements (14, 15).

8. An expansible plug according to one of the preceding claims, characterized in that the expansible plug (1) is manufactured from plastics material as an opened-out part in a single injection moulding operation, and the two shank-halves (4, 5) are joined at the plug tip (6) by means of an injection-moulded web (7).

## Revendications

1. Cheville à expansion (1) comportant une partie de fût fermée formant une douille (2) de fût, qui est dotée d'un canal pour vis et qui se transforme en un fût d'expansion (3) divisé dans le sens longitudinal, dont les deux moitiés (4, 5) de fût comportent des éléments d'expansion (14, 15) disposés de façon décalée avec des intervalles entre elles, qui forment une zone d'expansion (11) fermée en pénétrant l'un dans l'autre, les éléments d'expansion (14, 15) présentant des trous percés (17, 18) disposés avec décalage l'un par rapport à l'autre et excentriquement par rapport à l'axe médian (16) de la cheville à expansion (1), trous qui se chevauchent de façon telle que la zone de chevauchement forme un canal pour vis rétréci, **caractérisée par le fait que** la zone d'expansion (11) s'effile coniquement en direction de la pointe (6) de la cheville et en ce que les deux moitiés (4, 5) de fût sont reliées solidement à la douille (2) de fût, l'une ( 4) des moitiés de fût est reliée à la douille (2) de fût en formant une seule pièce avec celle-ci, et l'autre moitié (5) de fût étant reliée à la douille (2) de fût par l'intermédiaire d'une liaison par concordance et blocage de formes géométriques.

2. Cheville à expansion selon la revendication 1, **caractérisée en ce que** la liaison par blocage de formes géométriques est une liaison à queue d'aronde (12), ou une autre liaison sûre à l'encontre de la rotation, du pliage et de la traction.

3. Cheville à expansion selon l'une des revendications 1 ou 2, **caractérisée en ce que** sur la douille (2) de fût et sur les deux moitiés (4, 5) de fût formant la zone d'expansion (11), au moins une nervure longitudinale (23-25) fait saillie dans chaque cas, à l'extérieur en tant qu'élément de sécurité à l'encontre de la rotation.

4. Cheville à expansion selon la revendication 3, **caractérisée en ce que** les nervures longitudinales (23-25) sont disposées avec décalage en ce qui concerne leur position dans le sens longitudinal et en ce qui concerne leur position angulaire.

5. Cheville à expansion selon l'une des revendications précédentes, **caractérisée en ce qu'**une nervure longitudinale (24) est disposée dans la zone de transition (26) entre la douille (2) de fût et une moitié (4) de fût.

6. Cheville à expansion selon l'une des revendications précédentes, **caractérisée en ce que** dans la douille (2) de fût fait saillie un limiteur d'enfoncement (12) destiné à une vis de fixation (9) mise en place sous forme d'un collet annulaire ou d'un moyen similaire.

7. Cheville à expansion selon l'une des revendications précédentes, **caractérisée en ce que** sur la pointe (6) de la cheville est formé un tronçon (27) d'expansion avant, dont la direction d'expansion est décalée de 90° par rapport à la direction d'expansion de la zone d'expansion (11) définie par les éléments d'expansion (14, 15).

8. Cheville à expansion selon l'une des revendications précédentes, **caractérisée en ce que** la cheville à expansion (1) est fabriquée, à l'état développé ou déplié, en matière de synthèse en une seule opération d'injection, et en ce que les deux moitiés (4, 5) de fût sont reliées à la pointe (6) de la cheville par un voile d'injection (7).
